# FASCICULE DE BREVET EUROPEEN

(11) **EP 0 617 349 B1**
(45) Date de publication et mention de la délivrance du brevet: **01.04.1998**
(21) Numéro de dépôt: 94400360.7
(22) Date de dépôt: 18.02.1994
(51) Int. Cl.: G05D 1/00, G06F 9/44

(54) **Procédé et dispositif de reconfiguration en temps réel de la trajectoire d'un véhicule**
Verfahren und Vorrichtung zur Rekonfiguration in Echtzeit einer Fahrzeugstrajektorie
Method and device for real-time reconfiguration of a vehicle-trajectory

(30) Priorité: 26.03.1993 FR 9303643
(43) Date de publication de la demande: 28.09.1994
(73) Titulaire: SEXTANT AVIONIQUE, 92366 Meudon la Forêt Cédex (FR)
(72) Inventeur: Sassus, Pierre, F-92140 Clamart (FR); Mielnik, Jean-Christophe, F-78180 Montigny le Bretonneux (FR)
(74) Mandataire: de Saint-Palais, Arnaud Marie

(56) Documents cités:
- THE 26TH IEEE CONFERENCE ON DECISION AND CONTROL, vol.3, 9 Décembre 1987, LOS ANGELES,CALIFORNIA pages 1954 - 1959 BEATON ET AL 'REAL-TIME MISSION AND TRAJECTORY PLANNING'
- IEEE 1988 NATIONAL AEROSPACE AND ELECTRONICS CONFERENCE, vol.3, 23 Mai 1988, DAYTON pages 1114 - 1120 BATH ET AL 'HEURISTIC ROUTE PLANNING: AN APPLICATION TO FIGHTER AIRCRAFT'
- 1986 AMERICAN CONTROL CONFERENCE, vol.1, 18 Juin 1986, SEATTLE pages 457 - 462 DELANEY 'MULTI-SYSTEM REPORT INTEGRATION USING BLACKBOARDS'
- 1988 AMERICAN CONTROL CONFERENCE, vol.1, 15 Juin 1988, ATLANTA pages 195 - 201 HUESCHEN ET AL 'APPLICATION OF AI METHODS TO AIRCRAFT GUIDANCE AND CONTROL'
- IEEE 1988 NATIONAL AEROSPACE AND ELECTRONICS CONFERENCE, vol.4, 23 Mai 1988, DAYTON pages 1266 - 1273 BERNING ET AL 'KNOWLEDGE ENGINEERING FOR THE ADAPTIVE TACTICAL NAVIGATOR'

## Description

La présente invention concerne un procédé et un dispositif permettant de déterminer en temps réel la trajectoire d'un véhicule lorsque celle définie initialement est perturbée par un événement imprévu.

Elle s'applique notamment, mais non exclusivement, aux aérodynes qu'ils soient pilotés ou non comme c'est le cas des missiles. Dans le cas d'un aérodyne non piloté, ce procédé permet de déterminer une nouvelle trajectoire sur laquelle l'aérodyne sera guidé. Dans le cas d'un aérodyne piloté, il s'agit de fournir à l'équipage une aide à la décision quant à la meilleure trajectoire à suivre. Pour cela, plusieurs trajectoires peuvent lui être soumises.

Généralement, le bon déroulement de la mission d'un aérodyne repose sur la définition d'un plan de vol établi lors de la préparation de la mission. Cette trajectoire nominale est destinée à assurer l'efficacité de la mission. Cependant, des événements imprévus peuvent survenir pendant son déroulement, rendant la trajectoire initiale inadaptée, voire obsolète. Ces événements peuvent consister, par exemple, en une panne d'un organe vital ou de nouvelles conditions météorologiques.
Il est alors nécessaire de déterminer une nouvelle trajectoire au cours du vol, voire, dans certains cas, remettre en cause les objectifs de la mission. Cette détermination sera d'autant plus pertinente que le contexte de la mission aura été initialement décrit de manière précise et qu'un ensemble complet de solutions opérationnelles de reconfiguration auront été examinées.
Il en résulte que la détermination d'une nouvelle trajectoire devra prendre en compte une multiplicité de paramètres et étudier plusieurs solutions pour aboutir à un compromis entre plusieurs exigences bien souvent contradictoires, comme par exemple, sécurité, économie et efficacité.

Or, pour résoudre des problèmes complexes de ce type dans lesquels un nombre important de paramètres interviennent, les techniques de l'intelligence artificielle (notamment les systèmes à base de connaissances) apportent des solutions évoluées de représentation et de traitement des connaissances : modélisation de l'environnement, modélisation du système lui-même (capacités, ressources, objectifs...), modélisation des connaissances opératives.

Mais il s'avère que la détermination d'une trajectoire à trois dimensions, dans laquelle interviennent, en outre, le temps, la vitesse et d'autres paramètres, et son évaluation en fonction d'une multiplicité de critères, apparait notablement plus complexe que ce qu'un unique système à base de connaissances est capable de résoudre.

Une solution de ce problème est décrite dans le document 26th IEEE Conference on decision and control, vol. 3, 9 Dec. 1987, Los Angeles Cal., pages 1954 à 1959, "Real-time mission and trajectory planning" de Beaton et al.
Toutefois, cette solution implique un grand nombre de calculs de trajectoire inutiles, et donc des moyens de calculs importants pour permettre une reconfiguration en temps réel.

Par ailleurs, pour un aérodyne et un type de mission donnés, un unique système à base de connaissances peut se révéler difficile à mettre au point car il devrait contenir en fait des connaissances de domaines divers et relativement indépendants. Il s'agit par exemple de navigation horizontale, de gestion du temps et du carburant, etc... Il est donc avantageux de faire appel aux techniques de multi-expertise qui permettent de faire travailler en coopération plusieurs systèmes à base de connaissances, chacun étant spécialisé dans un domaine donné.

Si on considère maintenant des aérodynes différents et donc des missions différentes, il est avantageux d'utiliser dans chaque cas la même architecture multi-experte dans la mesure car le problème que l'on cherche à résoudre est à chaque fois un problème de reconfiguration d'itinéraire : l'architecture proposée est donc générique. Ce qui distingue les différentes applications, ce sont les modules experts à mettre en oeuvre car ils dépendent de la nature de la mission.

La difficulté qui apparaît alors réside dans la manière de mettre en oeuvre plusieurs systèmes à base de connaissances spécialisés dans le but de résoudre un problème commun et d'élaborer un ensemble de solutions complètes à partir des réponses partielles fournies par chaque système à base de connaissances.

Ainsi, dans un tout autre domaine, le document 1986 American Control Conference, vol. 1, 18 june 1986, Seattle, pages 457-462, "Multi-system report integration using blackboards" de Delaney propose d'utiliser la technique du tableau noir à la détection et la localisation d'avions à partir de plusieurs sources.

Dans le cadre de la reconfiguration de trajectoire, la résolution de ce problème implique :
- la modélisation d'un ensemble complet de données décrivant la mission à réaliser et ses alternatives éventuelles, de données d'environnement,
- la modélisation des actions de reconfiguration,
- la modélisation des raisonnements à appliquer en fonction des situations rencontrées et permettant d'élaborer une solution de reconfiguration.

En ce qui concerne les données, elles forment un ensemble d'informations très structurées et hétérogènes quant à leurs niveaux d'abstraction. Ainsi, par exemple, une trajectoire peut se représenter par une suite de points, par la succession de phases de pilotage, ou de manière plus symbolique par des libellés représentant les différentes étapes de la mission associée à cette trajectoire.

Par ailleurs, les actions à effectuer pour la reconfiguration sont également très hétérogènes. Elles peuvent concerner la modification de la mission, la modification du plan de vol, ou encore le calcul des coordonnées des points d'une trajectoire.

En outre, les raisonnements appliqués concernent des problèmes très divers, comme la gestion des contraintes, et la replanification d'une mission qui porte sur plusieurs niveaux de représentation. Ainsi, lorsqu'il s'agit de traiter un problème local, le raisonnement porte sur des trajectoires constituées d'une suite de phases. Inversement, lorsque le problème est plus global, un raisonnement portant sur des trajectoires représentées par une séquence de phases apparait comme trop détaillé et inadapté, car le nombre de données à traiter serait alors prohibitif. Il est donc nécessaire dans ce cas de raisonner plus globalement, par exemple, sur les objectifs de la mission.

La présente invention a particulièrement pour but de résoudre ces problèmes. A cet effet, elle propose un procédé pour la reconfiguration en temps réel de la trajectoire d'un véhicule utilisant un calculateur connecté à des organes embarqués à bord dudit véhicule qui fournissent en temps réel des informations concernant la position, l'attitude et l'état du véhicule, ainsi que son environnement, ledit calculateur comprenant un processeur et des mémoires dans lesquelles sont stockées notamment les données concernant la mission du véhicule et son contexte, et une trajectoire initiale.
Ce procédé est caractérisé en ce que, en vue d'adapter la mission à une situation nouvelle engendrée par l'arrivée d'un événement perturbateur, il comprend :
- l'analyse du contexte et l'interprétation dudit événement pour déterminer les actions à effectuer ;
- la décomposition desdites actions en alternatives constituées chacune d'une séquence d'actions élémentaires exécutables par l'un au moins d'une pluralité de modules experts spécialisés ;
- la sélection successive de chaque alternative en fonction d'une certaine stratégie ;
- le traitement de l'alternative sélectionnée consistant à mettre en oeuvre les modules experts spécialisés en vue d'élaborer une trajectoire à l'aide des actions élémentaires composant l'alternative sélectionnée, et à évaluer la trajectoire obtenue relativement à au moins un critère ;
- la sélection d'au moins une trajectoire présentant la meilleure évaluation et sa présentation en tant que solution, associée à son évaluation.

Les différentes étapes de ce procédé apparaissent indépendantes des modules experts mis en oeuvre. Elles sont donc applicables aux problèmes de reconfiguration en temps réel de trajectoire de n'importe quel véhicule affecté à une mission quelconque. Ce procédé peut également être adapté à un autre problème complexe du même ordre, moyennant la mise en oeuvre de modules experts spécialisés spécifiquement adaptés et la modification de leur mise en oeuvre.

Avantageusement, afin de prendre en compte les différents niveaux de représentation qui apparaissent au niveau des données, et qui se répercutent sur les actions et les raisonnements qui sont appliqués, ces entités ont été classées en différentes catégories correspondant au niveau de représentation des données. Ainsi, le niveau de représentation le plus élevé se rapproche sensiblement du langage du pilote, tandis que le plus bas correspond au langage mathématique.

Ainsi pour représenter une trajectoire, quatre niveaux de représentation ont été définis : mission, fonction, phase et fin.

La représentation d'une trajectoire de niveau mission se compose d'un ensemble de phases de mission décrites par un simple libellé désignant une partie de la trajectoire relativement au contexte de la mission, par exemple, "trajectoire aller".
Une trajectoire de "niveau fonction" est une suite de portions de trajectoires caractérisées macroscopiquement par exemple par la donnée d'une pente, d'une vitesse moyenne, d'une longueur, des positions des points extrémités de la portion.
Les caractéristiques d'une trajectoire de niveau phase dépendent du module expert qui l'a élaboré. Elles sont définies par une suite de phases correspondant chacune à une attitude particulière du véhicule.
Une trajectoire du niveau fin est une suite de points déterminés par leurs coordonnées dont la nature et le nombre dépendent également du module dont la trajectoire est issue.

Les actions sont également classées par niveaux en fonction du niveau de représentation des données sur lesquelles elles s'appliquent, mission, plan de vol, trajectoire :
- le niveau trajectoire regroupe les actions d'élaboration et de modification de trajectoires,
- le niveau plan de vol regroupe les actions de construction ou de modification de plan de vol,
- le niveau mission concerne les actions de modification de la mission.

Les actions élémentaires sont exécutables par au moins un module expert spécialisé, chaque module étant associé à une liste de services qu'il est en mesure d'assurer. Le développement et l'évaluation d'une alternative consiste donc à rechercher les actions de l'alternative dans ces listes de services, et à activer certains des modules experts compétents.

Certaines actions peuvent être associées à des contraintes qui décrivent les conditions dans lesquelles l'action doit se réaliser. Le développement d'une alternative consiste alors également à vérifier si ces contraintes sont vérifiées. Dans le cas où une contrainte n'est pas satisfaite, il s'agit alors de rechercher un palliatif qui correspond à une action supplémentaire à effectuer. Trois alternatives apparaissent alors :
- soit on accepte que la contrainte ne soit pas satisfaite,
- soit on lance l'exécution de l'action palliative,
- soit on modifie, lorsque cela est possible, l'action sur laquelle porte la contrainte pour que cette dernière soit satisfaite, avec en contrepartie une détérioration de certains critères d'évaluation.

Les différentes alternatives sont mémorisées sous la forme d'un graphe dans lequel chaque noeud représente une alternative qui est décrite, tout d'abord, sous la forme d'une séquence d'actions élémentaires, puis, lorsque celle-ci est développée et évaluée, sous la forme d'une trajectoire accompagnée de ses évaluations en fonction des différents critères. La racine du graphe correspond à la mission nominale telle qu'elle a été définie au départ de la mission. La solution fournie à l'utilisateur sera constituée d'une ou plusieurs alternatives accompagnées de leurs trajectoires respectives et de leurs évaluations. Dans le cas d'un aérodyne sans pilote, une solution est sélectionnée automatiquement.

A cet effet, les raisonnements mis en oeuvre pour élaborer une ou plusieurs solutions pertinentes sont également classés hiérarchiquement en trois niveaux.
Le premier niveau consiste à déterminer les différentes solutions alternatives de reconfiguration à mettre en oeuvre à la suite d'un événement imprévu, chaque solution étant définie par une séquence d'actions élémentaires.

Le second niveau de raisonnement regroupe les stratégies d'évaluation des solutions déterminées par le premier niveau de raisonnement et les tests de satisfaction des contraintes imposées par la mission.
Le troisième niveau effectue la sélection et l'activation des modules experts spécialisés pour exécuter chaque action élémentaire d'une alternative.

Au second niveau de raisonnement, plusieurs stratégies peuvent être mises en oeuvre.
Une première stratégie consiste à développer et à évaluer toutes les alternatives puis à sélectionner celle qui présente la meilleure évaluation.

Une deuxième stratégie consiste à sélectionner la première alternative dont l'évaluation est jugée satisfaisante car répondant à un certain nombre de conditions. Ce raisonnement est appliqué aux alternatives comportant des contraintes non satisfaites.

Une troisième stratégie, intermédiaire entre les deux précédentes, consiste à éliminer toutes les alternatives pour lesquelles des contraintes ne sont pas satisfaites et celles dont l'évaluation ne peut que se détériorer par l'application de palliatifs aux contraintes non satisfaites.

L'évaluation des différentes alternatives consiste à déterminer un facteur risque et un facteur efficacité.
Pour cela, soit on calcule des grandeurs numériques représentant ces facteurs en prenant en compte les données du contexte de la mission et de l'alternative, comme par exemple, les données relatives aux nouvelles conditions météorologiques, ou à l'état du véhicule.
Soit, on se réfère à un classement par ordre de préférence établi préalablement par un expert.

Il s'agit ensuite de sélectionner la ou les meilleures alternatives en établissant un compromis entre les facteurs risque et efficacité.
Pour cela, les trajectoires suivantes sont retenues :
- la moins risquée et la plus efficace,
- la plus efficace de deux trajectoires équivalentes en risque,
- la moins risquée de deux trajectoires équivalentes en efficacité,
- la préférée de l'expert dans le cas de deux trajectoires équivalentes, soit parce qu'elles présentent des facteurs risque et efficacité équivalents, soit parce que l'une est plus efficace, mais plus risquée que l'autre.

Dans ce dernier cas, si les deux trajectoires ne sont pas classées a priori par l'expert, elles sont proposées toutes les deux au choix du pilote. Dans le cas d'un aérodyne sans pilote, un choix arbitraire est effectué.

Avantageusement, la mise en oeuvre des modules experts spécialisés s'effectue selon le principe du tableau noir, lequel est divisé en deux parties, une première partie sur laquelle le contexte de la mission est inscrit, et une seconde, hiérarchisée en quatre niveaux, sur laquelle l'alternative examinée est complétée successivement par les différents modules experts mis en oeuvre.

Comme précédemment mentionné, l'invention concerne également un dispositif pour la mise en oeuvre du procédé selon l'invention.
Ce dispositif comprend une unité centrale à base de processeurs et de mémoires, un terminal de communication homme/machine (sauf pour les aérodynes non pilotés) et une mémoire de masse, l'unité centrale étant reliée aux autres équipements électroniques du véhicule pour recevoir en temps réel les informations concernant la position, l'attitude et l'état du véhicule, ainsi que son environnement.

Un mode de réalisation du procédé selon l'invention sera décrit ci-après, à titre d'exemple non limitatif, avec référence aux dessins annexés dans lesquels :
la figure 1 est une représentation schématique de l'architecture matérielle du dispositif selon l'invention ;
la figure 2 représente schématiquement l'architecture fonctionnelle du dispositif ;
les figures 3 à 6 représentent les architectures des différentes fonctions mises en oeuvre par le dispositif ;
la figure 7 représente schématiquement une trajectoire ;
les figures 8 à 11 illustrent différentes étapes de développement du graphe d'alternatives.

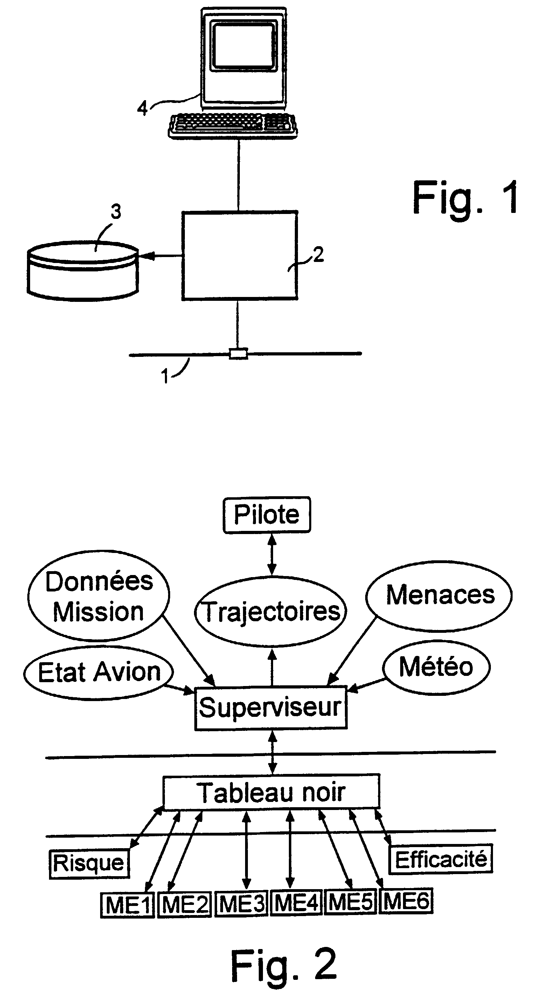

Le schéma de la figure 1 montre un exemple d'architecture d'une interface embarquée à bord d'un aérodyne destiné à mettre en oeuvre le procédé de reconfiguration de trajectoire.
Ce dispositif comprend une unité centrale 2 sur laquelle sont connectés un terminal de communication homme/machine 4, une mémoire de masse 3 qui peut être constituée de plusieurs unités de type disque magnétique, optique ou magnéto-optique. L'unité centrale 2 est raccordée aux bus 1 de l'avion pour acquérir en temps réel les données émanant des autres équipements électroniques embarqués à bord de l'aérodyne, notamment, la position géographique de l'aérodyne, ainsi que son altitude, sa vitesse, son état et la masse de carburant restant dans ses réservoirs.

Le terminal de communication 2 qui comprend un écran et un clavier, permet au pilote d'introduire de nouvelles informations concernant la mission qu'il doit remplir, et de visualiser les trajectoires fournies par le dispositif.

Ainsi, sur la figure 2, l'unité centrale 2 réalise une fonction principale Superviseur qui reçoit en entrée, les données de mission, l'état de l'avion et les événements qui peuvent perturber la mission, comme par exemple, de nouvelles conditions météorologiques ou une panne d'un organe vital de l'avion.
La fonction Superviseur fournit en réponse au pilote, une ou plusieurs trajectoires à suivre, associées à l'évaluation de critères qui vont lui permettre de sélectionner la solution la plus adaptée pour faire face à la perturbation.

Pour pouvoir proposer au pilote un ensemble de solutions, la fonction Superviseur dispose d'un ensemble de modules experts spécialisés ME1 à ME6, et deux modules d'évaluation de risque et d'efficacité, avec lesquels il dialogue selon le principe du tableau noir. Bien entendu, le nombre de ces modules n'est pas limité.
Ces modules experts spécialisés sont conçus selon le schéma des systèmes à base de connaissances. Dans le cadre de l'élaboration de trajectoires d'un aérodyne, les modules experts mis en oeuvre peuvent concerner :
- l'élaboration de trajectoires horizontales ME1,
- l'élaboration de trajectoires verticales ME2,
- la gestion du temps et du carburant ME3,
- l'évitement de menaces d'ordre météorologique ME4, ...

Par ailleurs, le principe du tableau noir consiste à réserver un espace mémoire dans lequel chaque module expert activé par le Superviseur va chercher les informations dont il a besoin, et sur lequel il va écrire les résultats qu'il a obtenu, ces résultats pouvant bien entendu servir à un autre module expert.
Le tableau noir est divisé en deux parties, la première partie étant réservée aux données de mission et d'environnement, tandis que la seconde est utilisée au dialogue entre le Superviseur et les modules experts spécialisés.
Cette seconde partie est divisée en quatre parties réservées respectivement aux informations relatives aux différents niveaux de représentation d'une trajectoire.

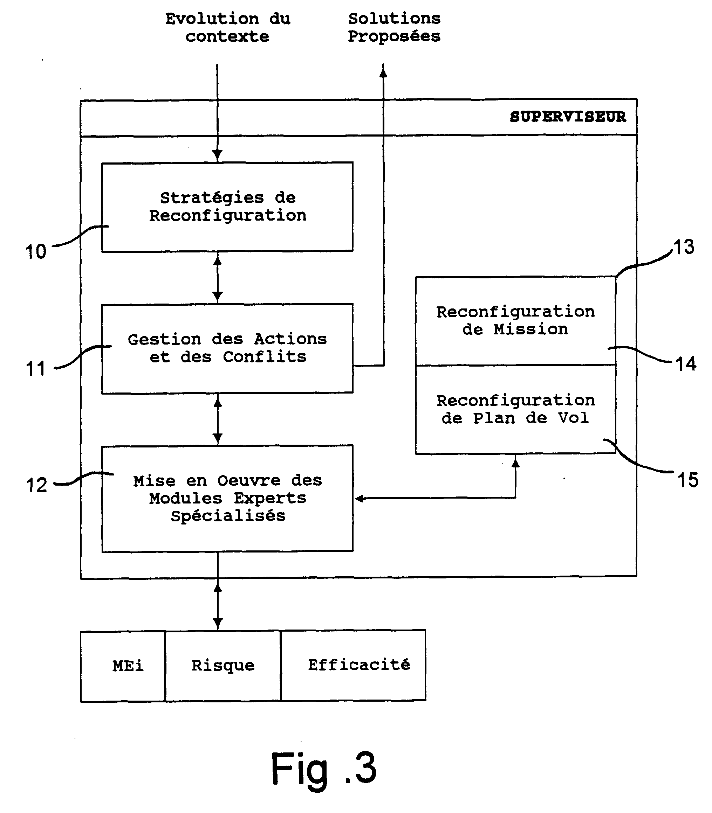

Tel que représenté sur la figure 3, le Superviseur comprend quatre fonctions :
- une fonction Stratégies de Reconfiguration de trajectoire 10, incluant l'analyse du contexte,
- une fonction Gestion des Actions et des Conflits 11,
- une fonction Mise en Oeuvre des Modules Experts Spécialisés 12, et
- une fonction Reconfiguration 13 comprenant deux modules, un module de reconfiguration de mission 14 et un module de reconfiguration de plan de vol 15, ces deux modules faisant partie du superviseur pour des raisons liées au contexte de l'étude en cours (en fait, ces deux modules sont des modules de reconfiguration au même titre que les modules de reconfiguration de trajectoire, ils font donc partie des MEi).

La fonction Stratégies de Reconfiguration 10 permet de définir les actions à entreprendre en fonction du type de l'événement qui est survenu.
Ces actions sont fournies à la fonction Gestion des Actions et des Conflits 11 qui va élaborer et évaluer des solutions en faisant appel aux modules experts spécialisés MEi par l'intermédiaire de la fonction Mise en Oeuvre des Modules Experts Spécialisés 12.

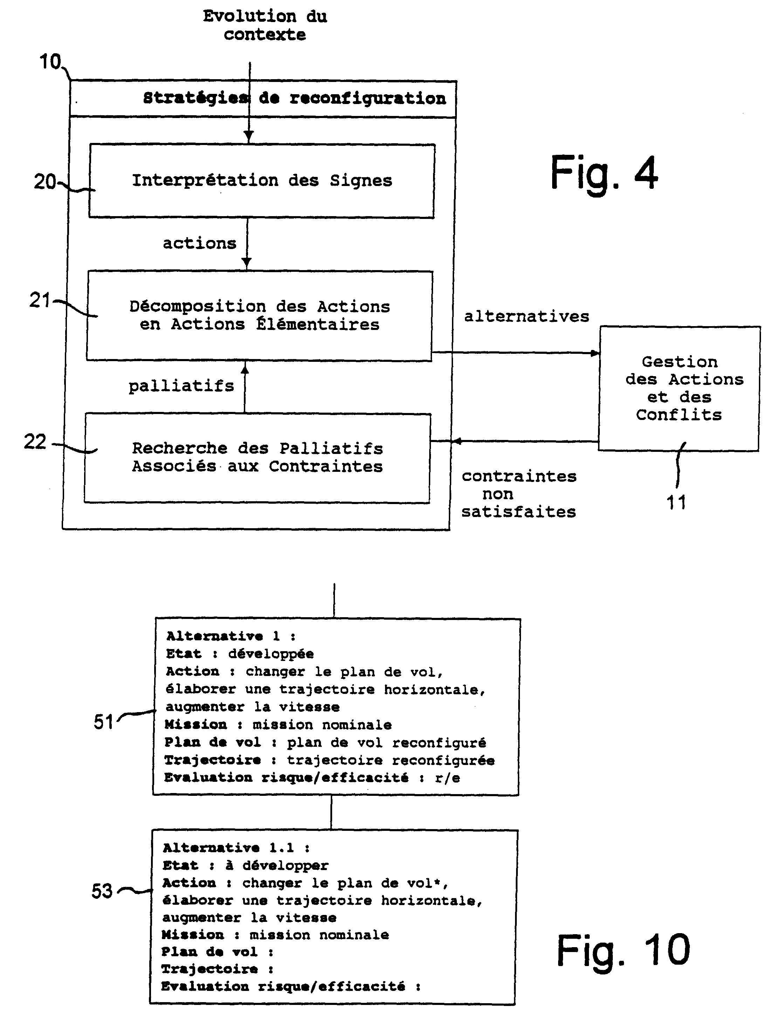

Sur la figure 4, la fonction Stratégies de Reconfiguration 10 se décompose en :
- un module Interprétation des Signes 20 ou événements qui détermine la ou les actions à exécuter en fonction de l'événement,
- un module Décomposition des Actions en Actions Elémentaires 21 qui décompose les actions identifiées précédemment en alternatives de séquences d'actions élémentaires, et
- un module Recherche des Palliatifs Associés aux Contraintes 22 non satisfaites.

Les alternatives identifiées sont envoyées à la fonction Gestion des Actions et des Conflits 11 pour élaborer les trajectoires et les évaluer.

Certaines actions ne peuvent être exécutées que sous certaines contraintes, et si ces contraintes ne peuvent pas être respectées, elles sont parfois associées à des palliatifs qui sont traités comme des actions. Pour cela la fonction Gestion des Actions et des Conflits retourne les contraintes non satisfaites au module Recherche de Palliatifs Associés aux Contraintes 22.

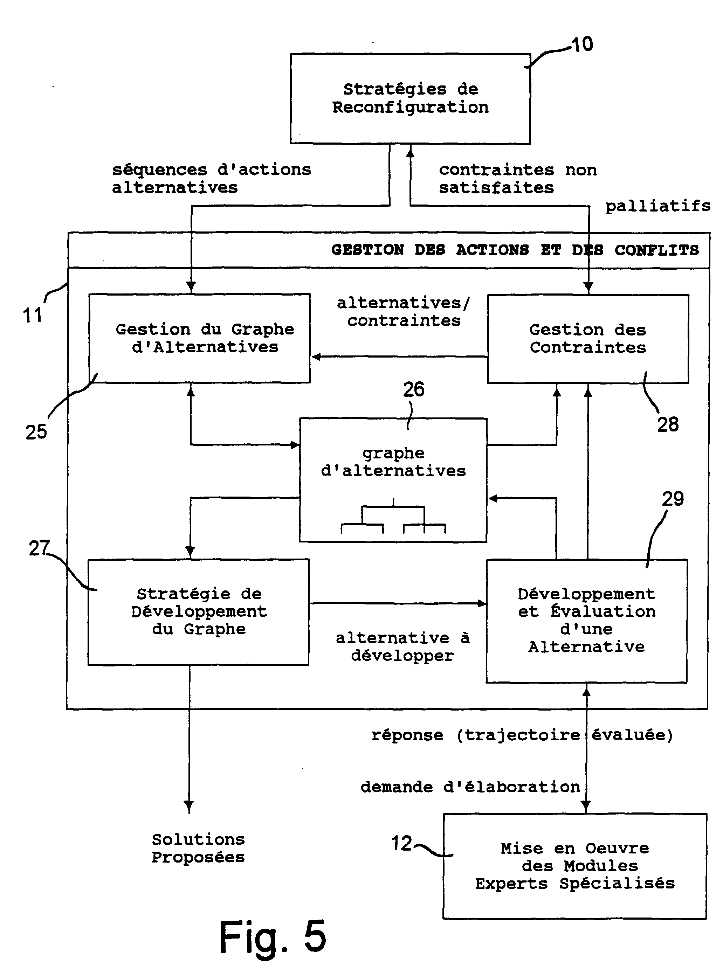

Sur la figure 5, la fonction Gestion des Actions et des Conflits 11 est construite autour d'un graphe d'alternatives 26 dans lequel les différentes alternatives déterminées par le module Décomposition des Actions en Actions Élémentaires 21 apparaissent sous la forme de noeuds reliés entre eux hiérarchiquement, et dans lequel la mission, telle qu'elle est exécutée par l'aérodyne, le plan de vol et la trajectoire nominale suivis constituent le noeud racine.

Ce graphe est géré par le module Gestion du Graphe d'Alternatives 25. Les alternatives sont développées et évaluées selon une certaine stratégie qui est mise en oeuvre par le module Stratégie de Développement du Graphe 27 qui fournit une ou plusieurs solutions, une fois que toutes les alternatives pertinentes ont été développées.
Ce module fournit l'alternative à développer au module Développement et Évaluation d'une Alternative 29 qui va faire appel à la fonction Mise en Oeuvre des Modules Experts Spécialisés 12 pour chaque action de l'alternative. Il met à jour le graphe d'alternatives avec les résultats qu'il a obtenu et appelle un module Gestion des Contraintes 28 qui teste les contraintes éventuelles attachées à l'alternative.

Le module Gestion des Contraintes 28 fait appel au module Recherche de Palliatifs 22 de la fonction Stratégies de Reconfiguration 10 pour chaque contrainte non satisfaite. Il en résulte de nouvelles alternatives à étudier qui sont fournies au module Gestion du Graphe 25 pour compléter ce dernier.

Le module Développement et Évaluation d'une Alternative 29 est parfois amené, en fonction du contexte, à compléter la séquence d'actions à exécuter par des actions génériques.

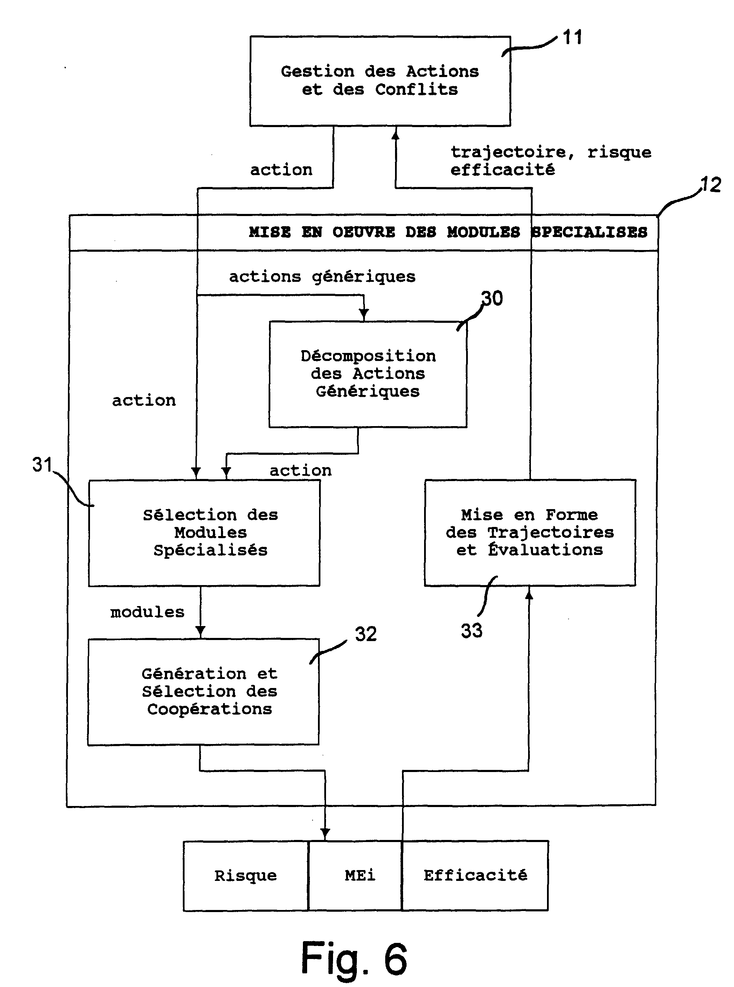

Chacune de ces actions est envoyée à la fonction Mise en Oeuvre des Modules Experts Spécialisés 12 dans laquelle les actions génériques sont décomposées en actions élémentaires par le module Décomposition des Actions Génériques 30 (figure 6). Chaque action élémentaire est ensuite fournie à un module Sélection des Modules Spécialisés 31 qui constitue une liste de modules experts spécialisés MEi susceptibles de contribuer à la réalisation de l'action.

L'action et la liste des modules experts spécialisés est envoyée au module Génération et Sélection des Coopérations 32 qui détermine en fonction du contexte, le module expert MEi le plus approprié pour exécuter l'action, et qui l'active. Dans le cas des actions génériques, plusieurs modules experts pris dans la liste sont nécessaires pour assurer la réalisation de l'action.

Le module Mise en Forme des Trajectoires et Évaluations 33 permet de reconstituer une trajectoire à partir des différents résultats fournis par les modules experts MEi, et de lancer son évaluation en appelant les modules d'évaluation Risque et Efficacité.
La trajectoire élaborée et évaluée est retournée au module Développement et Évaluation d'une Alternative.

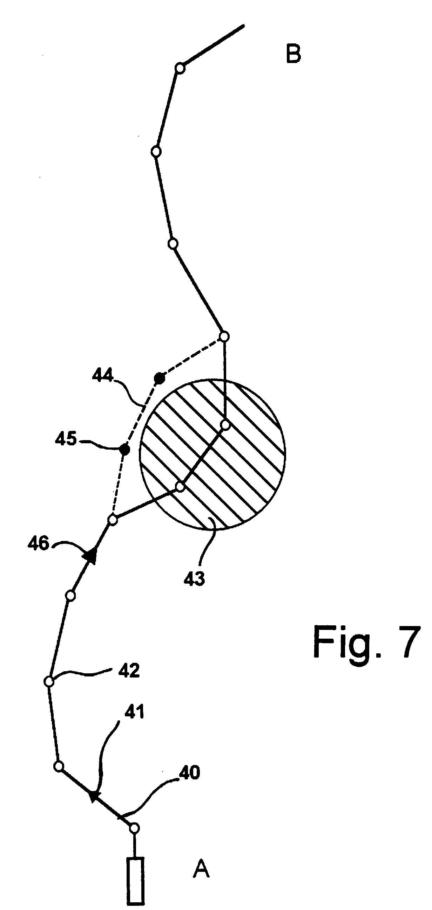

Pour bien expliquer le fonctionnement du dispositif, prenons l'exemple suivant représenté sur la figure 7. Cette figure représente une trajectoire de niveau fonction, telle qu'elle a été définie lors de la préparation de la mission. Elle est constituée par une succession de segments rectilignes 40 séparés par des cercles vides 42, et relie un terrain A à un terrain B. A tout instant, la position de l'avion et sa direction est repérée par une flèche noire 41 placée sur la trajectoire ainsi représentée.

Au moment où l'avion se trouve au point 46, on annonce au pilote qu'il a devant lui une zone 43 présentant de mauvaises conditions météorologiques dont les caractéristiques (position, dimensions, ...) de la perturbation sont fournies.

La première étape consiste à analyser l'événement en fonction du contexte. Dans l'exemple considéré, il s'agit tout d'abord de déterminer si cet événement est à prendre en compte ou non, c'est-à-dire, si cette zone se trouve sur la trajectoire restant à parcourir, ou proche de celle-ci et si elle est réellement dangereuse compte tenu de ses caractéristiques.

A partir du moment où l'événement est à prendre en compte, le module Interprétation des Signes 20 de la fonction Stratégies de Reconfiguration 10 entre en jeu pour interpréter la situation. Pour cela, elle dispose d'une base de règles indiquant les actions à entreprendre en fonction des signes caractéristiques de chaque situation. Certaines de ces règles sont indiquées dans le tableau suivant :

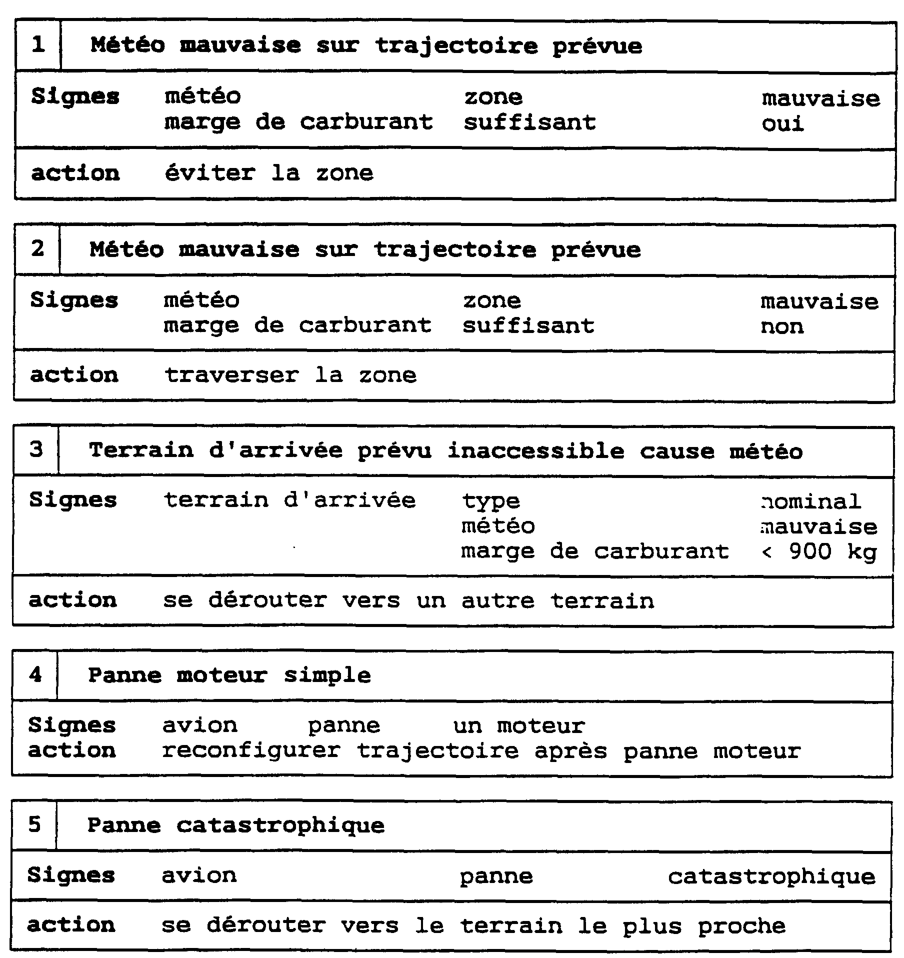

Supposons que la règle 1 qui consiste à éviter la zone soit applicable (l'avion dispose d'une réserve de carburant suffisante).
L'étape suivante consiste à mettre en oeuvre le module Décomposition des Actions en Actions Élémentaires 21 à partir de l'action "éviter la zone" indiquée par la règle 1.

Pour cela, ce module dispose de tables dans lesquelles il recherche l'action à décomposer. Ces tables associent les actions à décomposer à une ou plusieurs séquence s'excluant mutuellement d'actions élémentaires.

Ainsi, l'action "éviter la zone" peut être réalisée soit en contournant la zone, soit passant au dessus de la zone.
De son côté, l'action de contourner la zone se décompose en une action "changer le plan de vol" et une action augmenter la vitesse, tandis que l'action "passer au dessus de la zone" se décompose en une action "augmenter la vitesse" et une action "augmenter l'altitude".
On a ainsi deux alternatives à examiner.

Ces deux alternatives sont envoyées au module Gestion du Graphe d'Alternatives 25 de la fonction Gestion des Actions et des Conflits 11.

Le graphe d'alternatives 26 est constitué initialement d'un seul noeud 50 correspondant à la mission nominale, au plan de vol nominal et à la trajectoire nominale, tels qu'ils sont en cours d'exécution (figure 10). Tous les noeuds qui y sont ajoutés correspondent à des nouvelles trajectoires.

Chaque noeud de ce graphe est associé aux données suivantes :
- le nom du noeud qui correspond soit à la mission en cours d'exécution, soit à une alternative,
- son état, développé ou à développer, suivant que la trajectoire associée à l'alternative a été élaborée et évaluée ou non,
- la séquence d'actions correspondante,
- les références de la mission, du plan de vol et de la trajectoire qui lui sont associés, et
- la valeur des facteurs risque et efficacité, tels qu'ils ont été évalués.

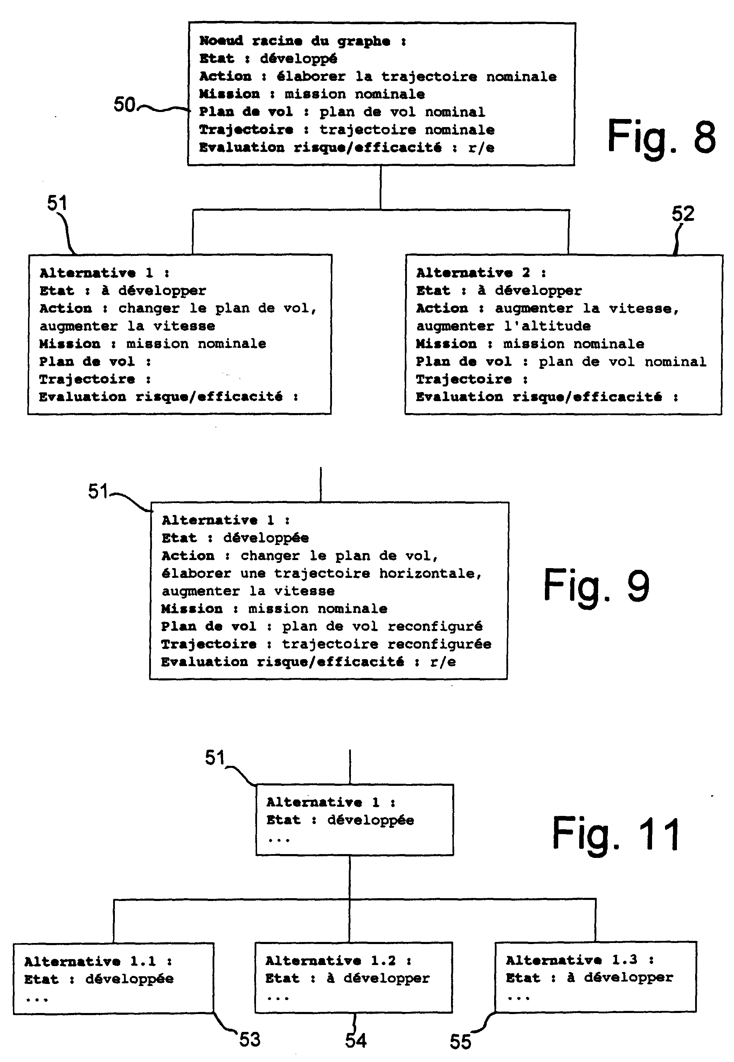

Ainsi, sur la figure 8, le graphe d'alternatives 26 a été complété par les deux alternatives 51,52 déterminées précédemment.

Le module Stratégie de Développement du Graphe 27 entre en action pour sélectionner une alternative parmi les deux alternatives non encore développées.

A cette étape de raisonnement, toutes les stratégies sont développées systématiquement, même si la première alternative développée est jugée satisfaisante. A ce niveau, l'ordre dans lequel les alternatives sont développées est donc sans importance.

L'alternative 1 (51) est par exemple sélectionnée et envoyée au module Développement et Évaluation d'une Alternative 29 qui a pour mission d'évaluer le triplet (mission, plan de vol, trajectoire) issu des actions de reconfiguration associées à l'alternative.
On sait a priori si les actions élémentaires d'une alternative aboutiront ou non à la définition complète du triplet (mission, plan de vol, trajectoire). Les actions complémentaires nécessaires sont donc ajoutées avant évaluation du triplet.

Dans cet exemple, les actions "changer le plan de vol" et "augmenter la vitesse" ne suffisent pas à déterminer une trajectoire horizontale. En effet, l'action changer le plan de vol concerne le niveau de représentation "plan de vol". Elle a pour effet de modifier la liste des étapes de navigation du plan de vol nominal. A partir de ces nouvelles étapes, il est nécessaire d'élaborer une trajectoire horizontale joignant les nouvelles étapes. Ceci est réalisé grâce à l'action générique "élaborer une trajectoire horizontale" qui concerne le niveau "trajectoire". C'est donc au total trois actions qui vont engendrer la reconfiguration : "changer le plan de vol", "élaborer une trajectoire horizontale" et "augmenter la vitesse". Ces trois actions sont classées par niveau décroissant (mission, plan de vol, trajectoire) et sont transmises à la fonction Mise en Oeuvre des Modules Experts Spécialisés 12.

La première opération effectuée par cette fonction est de décomposer les actions génériques éventuelles à l'aide du module Décomposition des Actions Génériques 30. Contrairement aux actions issues de la fonction Stratégies de Reconfiguration 10, les actions génériques, telles que "élaborer une trajectoire horizontale", ne sont pas associées à une partie de plan de vol clairement définie.
En effet, la partie de plan de vol, objet de la reconfiguration est divisée en portions de caractéristiques homogènes, et chacune des actions portent sur un sous-ensemble de ces portions.

Connaissant les actions à exécuter et les portions de plan de vol sur lesquelles elles doivent porter, on peut déterminer les modules experts spécialisés MEi compétents pour l'exécution de ces actions. Pour cela, le module Sélection des Modules Spécialisés s'appuie sur une liste d'actions que chaque module spécialisé MEi met à la disposition du Superviseur.

Ainsi, l'action "changer le plan de vol" pour éviter une zone de mauvaise météo peut être réalisée par le module expert Reconfiguration de Plan de Vol 15 faisant partie du Superviseur, et l'action "élaborer une trajectoire horizontale" pour contourner une zone de mauvaise météo peut être réalisée par le module expert spécialisé Navigation Horizontale ME1.
Les noms des modules spécialisés MEi ainsi identifiés sont transmis au module Génération et Sélection des Coopérations 32 dont le rôle est d'établir les coopérations entre modules spécialisés MEi sélectionnés nécessaires à l'obtention d'une trajectoire en quatre dimensions (latitude, longitude, altitude et vitesse). Pour cela, chaque module spécialisé MEi est associé à une donnée qui indique les dimensions qu'il peut élaborer.

Par exemple, les modules Navigation Horizontale ME1 et Evitement de Menace Météo ME4 peuvent produire les dimensions latitude/longitude, le module Navigation Verticale ME2 peut produire la dimension altitude, et le module Gestion du Temps et du Carburant ME3 la dimension vitesse. Deux coopérations sont donc possibles :
- Navigation Horizontale + Navigation Verticale + Gestion du Temps et du Carburant, et
- Evitement de Menace + Navigation Verticale + Gestion du Temps et du Carburant.

Les trajectoires élaborées sont ensuite évaluées suivant les critères risque et efficacité à l'aide des modules spécialisés du même nom, puis retournés à la fonction Gestion des Actions et des Conflits 11 afin de compléter les champs vides de l'alternative (51) au niveau du graphe d'alternatives 26 (figure 9).

Ainsi, l'alternative 1.1 (51) telle que développée lors de cette étape, est représentée sur la figure 7 par une trajectoire en traits interrompus 44 dont les segments sont délimités par des points 45.

L'étape suivante consiste à examiner les contraintes de l'alternative qui vient d'être développée. Pour cela, le module Gestion des Contraintes 28 est activé pour tester la satisfaction des contraintes associées à l'alternative. Si l'une des contraintes n'est pas satisfaite, trois solutions sont envisageables :
- la contrainte est acceptée non satisfaite,
- le traitement d'une ou plusieurs actions de l'alternative est modifié pour aller dans le sens de la satisfaction de la contrainte,
- des actions correctives ou palliatifs sont appliquées pour tenter de satisfaire la contrainte.

Supposons que l'alternative 1 (51) possède deux contraintes "respecter l'horaire prévu" et "respecter la marge de carburant" et que la première contrainte n'est pas satisfaite dans le sens d'un retard.

La première possibilité consiste à accepter la contrainte non satisfaite, ce qui entraîne la dégradation du facteur "efficacité".
La seconde possibilité consiste à rechercher parmi les actions de l'alternative, celles pour lesquelles une possibilité d'influer sur leurs traitements a été explicitement définie. Dans l'exemple exposé, une seule le permet : "modifier le plan de vol". Dans ce cas, l'alternative est à nouveau élaborée et donne lieu à la création d'un noeud supplémentaire dans le graphe, l'alternative 1.1 (53), en tant que fils de l'alternative 1 (51) (figure 10).

La troisième possibilité consiste à solliciter le module Recherche de Palliatifs 22 de la fonction Stratégies de Reconfiguration 10 pour lui demander les actions correctives à mettre en oeuvre pour pallier à la contrainte non satisfaite "respecter l'horaire prévu".

Pour cela, ce module dispose de tables qui associent chaque contrainte à une liste d'actions palliatives, chaque action étant associée à une règle de sélection qui permet de choisir en fonction du contexte l'action la plus appropriée à appliquer à la contrainte.

Ainsi, la contrainte "respecter l'horaire prévu" est associée aux actions palliatives "résorber retard" et "résorber avance". La règle de sélection associée à chacune de ces actions fournit l'action "résorber retard" puisque, du fait de l'allongement de la trajectoire qui découle du contournement de la zone de mauvaise météo, l'avion se trouve en situation de retard.

L'action palliative ainsi sélectionnée est envoyée au module Décomposition des Actions en Actions Élémentaires 21. L'action "résorber retard" peut être effectuée en appliquant soit l'action "accélérer", soit l'action "raccourcir l'itinéraire". Ces deux actions alternatives sont retournées au module Gestion du Graphe d'Alternatives pour compléter le graphe 26. On obtient alors le graphe comme représenté figure 11.

L'alternative 1.1 (53) ayant déjà été développée, les alternatives à développer sont celles issues de l'application du palliatif.

La stratégie de sélection d'une alternative dans une branche de l'arbre issue d'un palliatif consiste à sélectionner les alternatives selon l'ordre du parcours en profondeur, soit dans cet exemple : 1.2 (54), puis 1.3 (55). S'il y avait un autre niveau, ce serait : 1.2, 1.3, 1.4, 1.4.1 et 1.4.2. On arrête le traitement d'une nouvelle alternative dès qu'une alternative satisfait la contrainte. Supposons que l'alternative 1.2 (54) satisfasse la contrainte "respecter l'horaire prévu". Les alternatives non développées (1.3) sont alors supprimées du graphe. Bien que non satisfaite, l'alternative 1.1 (53) est conservée à des fins d'explication.

Si toutes les contraintes de l'alternative 1.2 sont satisfaites, alors elle constitue une solution potentielle du problème de reconfiguration.

La branche correspondant à l'alternative 2 (52) est ensuite développée de manière analogue et lorsqu'il n'existe plus aucune alternative à développer, les alternatives qui possèdent le meilleur compromis risque/efficacité sont retournées par le Superviseur pour être présentées au pilote (sauf pour les aérodynes non pilotés).

Une fois que toutes les alternatives ont été développées et évaluées, et les contraintes testées, la ou les meilleures trajectoires sont sélectionnées en établissant un compromis entre les facteurs risque et efficacité.
Pour cela, les trajectoires suivantes sont retenues :
- la moins risquée et la plus efficace,
- la plus efficace de deux trajectoires équivalentes en risque,
- la moins risquée de deux trajectoires équivalentes en efficacité,
- la préférée de l'expert dans le cas de deux trajectoires équivalentes, soit parce qu'elles présentent des facteurs risque et efficacité équivalents, soit parce que l'une est plus efficace, mais plus risquée que l'autre.

Dans ce dernier cas, si les deux trajectoires ne sont pas classées a priori par l'expert, elles sont proposées toutes les deux au choix du pilote (sauf pour les aérodynes non pilotés).

## Revendications

1. Procédé caractérisé en ce que, en vue d'adapter la mission à une situation nouvelle engendrée par l'arrivée d'un événement perturbateur, il comprend :
- l'analyse du contexte et l'interprétation dudit événement pour déterminer les actions à effectuer ;
- la décomposition desdites actions en alternatives constituées chacune d'une séquence d'actions élémentaires exécutables par l'un au moins d'une pluralité de modules experts spécialisés (ME1 à ME6) ;
- la sélection successive de chaque alternative (51 à 55) en fonction d'une certaine stratégie ;
- le traitement de l'alternative sélectionnée consistant à mettre en oeuvre les modules experts spécialisés (ME1 à ME6) en vue d'élaborer une trajectoire à l'aide des actions élémentaires composant l'alternative sélectionnée, et à évaluer la trajectoire obtenue relativement à au moins un critère ;
- la sélection d'au moins une trajectoire présentant la meilleure évaluation et sa présentation en tant que solution, associée à son évaluation.

2. Procédé selon la revendication 1,
caractérisé en ce qu'il comprend l'écriture de chaque alternative dans un graphe (26) formé de noeuds (50 à 55) reliés entre eux de manière hiérarchique, et présentant un noeud racine (50) symbolisant la trajectoire suivie par le véhicule, chaque noeud symbolisant une alternative.

3. Procédé selon l'une des revendications précédentes,
caractérisé en ce que traitement d'une alternative comprend :
- la constitution, pour chaque action élémentaire de l'alternative, d'une liste des modules experts spécialisés (ME1 à ME6) capables d'exécuter cette action ;
- la sélection en fonction de la nouvelle situation d'au moins un module expert spécialisé par liste en vue de faire coopérer chaque module expert ainsi sélectionné pour obtenir une trajectoire complète ;
- l'activation successive des modules experts (ME1 à ME6) sélectionnés pour exécuter chaque action de l'alternative ;
- la mise en forme d'une trajectoire à partir des réponses fournies par les modules experts activés ; et
- l'évaluation de cette trajectoire et la vérification que des contraintes associées à la mission sont toujours satisfaites.

4. Procédé selon la revendication 3,
caractérisé en ce qu'il comprend le traitement de chaque contrainte non satisfaite, produisant trois nouvelles alternatives rattachées dans le graphe d'alternatives en dessous de l'alternative ne satisfaisant pas cette contrainte, ces trois alternatives correspondant respectivement aux trois cas suivants :
- la contrainte est acceptée non satisfaite avec comme conséquence une détérioration de certains critères d'évaluation ;
- le traitement d'une ou plusieurs actions de l'alternative est modifié lorsque cela est possible, pour aller dans le sens de la satisfaction de la contrainte, avec comme conséquence une détérioration de certains critères d'évaluation ; et
- des actions palliatives sont appliquées pour tenter de satisfaire la contrainte.

5. Procédé selon la revendication 4,
caractérisé en ce que l'application d'actions palliatives comprend :
- la recherche des actions palliatives associées aux contraintes non satisfaites, et adaptées au contexte de l'alternative,
- la décomposition de chaque action palliative en séquences d'actions élémentaires, chaque séquence d'actions élémentaires donnant naissance à une nouvelle alternative,
- la mise à jour du graphe d'alternatives en inscrivant toutes les alternatives ainsi identifiées (53 à 55) en dessous de l'alternative présentant les contraintes non satisfaites, et
- le traitement successif de chaque alternative identifiée.

6. Procédé selon l'une des revendications précédentes,
caractérisé en ce que les alternatives issues de la décomposition des actions en actions élémentaires (51,52) sont traitées systématiquement, tandis que celles issues de l'application de palliatifs (53 à 55) sont traitées successivement jusqu'à ce que l'une d'entre elles (52) ne présente aucune contrainte non satisfaite.

7. Procédé selon l'une des revendications précédentes,
caractérisé en ce que les trajectoires sont évaluées en déterminant un facteur risque et d'un facteur efficacité, et à l'aide d'un classement établi par un expert, la meilleure trajectoire sélectionnée en tant que solution correspondant à :
- la moins risquée et la plus efficace,
- la plus efficace de deux trajectoires équivalentes en risque,
- la moins risquée de deux trajectoires équivalentes en efficacité, ou bien
- la préférée de l'expert dans le cas de deux trajectoires équivalentes, soit parce qu'elles présentent des facteurs risque et efficacité équivalents, soit parce que l'une est plus efficace, mais plus risquée que l'autre.

8. Procédé selon l'une des revendications précédentes,
caractérisé en ce qu'il utilise quatre niveaux de représentation pour définir une trajectoire :
- une représentation de niveau mission qui se compose d'un ensemble de phases de mission décrites par un libellé,
- une représentation de niveau fonction qui se compose de portions de trajectoire caractérisées macroscopiquement par des paramètres tels que la donnée d'une pente, d'une vitesse moyenne, d'une longueur, ou des positions des points extrémités de la portion,
- une représentation de niveau phase caractérisée par la définition d'un ensemble de phases correspondant à une attitude particulière du véhicule, et
- une représentation de niveau fin qui se compose d'une suite de points déterminés par leurs coordonnées,
le mode de définition des phases de la représentation de niveau phase, ainsi que le type et le nombre de coordonnées des points de la représentation du niveau fin dépendant du module expert qui les a élaboré.

9. Dispositif pour la mise en oeuvre du procédé selon l'une des revendications précédentes,
pour la reconfiguration en temps réel de la trajectoire d'un véhicule utilisant un calculateur connecté à des organes embarqués à bord dudit véhicule qui fournissent en temps réel des informations concernant la position, l'attitude et l'état du véhicule, ainsi que son environnement, ledit calculateur comprenant un processeur et des mémoires dans lesquelles sont stockées notamment les données concernant la mission du véhicule et son contexte, et une trajectoire initiale,
caractérisé en ce qu'il comprend un terminal de communication homme/machine et que, en vue d'adapter la mission à une situation nouvelle engendrée par l'arrivée d'un évènement perturbateur, le calculateur est commandé par un programme qui assure :
- les fonctions d'une pluralité de modules experts spécialisés (ME1 à ME6) dans l'élaboration de trajectoires ;
- une fonction de superviseur qui met en oeuvre la pluralité de modules experts spécialisés (ME1 à ME6) en vue de définir une nouvelle trajectoire pour adapter la mission à une situation nouvelle engendrée par l'arrivée d'un événement perturbateur.

10. Dispositif selon la revendication 9,
caractérisé en ce que les échanges d'informations entre la fonction de superviseur et les modules experts spécialisés sont gérés selon le principe du tableau noir.

11. Dispositif selon la revendication 10,
caractérisé en ce que le tableau noir est divisé en deux parties, une première partie dans laquelle figurent les données relatives au contexte de la mission, et une seconde partie dans laquelle les différents modules experts mis en oeuvre constituent une nouvelle trajectoire.

12. Dispositif selon la revendication 11,
caractérisé en ce que la seconde partie du tableau noir est divisée en quatre niveaux correspondant aux quatre niveaux de représentation de trajectoire.

## Patentansprüche

1. Verfahren zur Echtzeit-Neukonfigurierung der Flugbahn eines Luftfahrzeugs, das einen Rechner verwendet, der mit an Bord des Luftfahrzeugs angeordneten Organen verbunden ist, die in Echtzeit Informationen betreffend die Position, die Fluglage und den Zustand des Luftfahrzeugs und seine Umgebung liefern, wobei der Rechner einen Prozessor sowie Speicher aufweist, in denen insbesondere die Daten, die den Einsatz des Luftfahrzeugs und seinen Kontext betreffen, und eine ursprüngliche Flugbahn gespeichert sind,
dadurch gekennzeichnet, daß es zur Anpassung des Einsatzes an eine neue Situation, die durch die Ankunft eines Stör-Ereignisses erzeugt wird, enthält:
- die Analyse des Kontexts und die Interpretation des Ereignisses, um die durchzuführenden Aktionen zu bestimmen,
- die Aufgliederung dieser Aktionen in Alternativen, die je aus einer Folge von elementaren Aktionen bestehen, die von mindestens einem einer Vielzahl von spezialisierten Experten-Modulen durchgeführt werden können (ME1 bis ME6),
- die aufeinanderfolgende Auswahl jeder Alternative (51 bis 55) in Abhängigkeit von einer bestimmten Strategie,
- die Verarbeitung der ausgewählten Alternative, die darin besteht, die spezialisierten Experten-Module (ME1 bis ME6) einzusetzen, um mit Hilfe der die ausgewählte Alternative bildenden elementaren Aktionen eine Flugbahn zu erarbeiten, und die erhaltene Flugbahn in Bezug auf mindestens ein Kriterium zu bewerten,
- die Auswahl mindestens einer Flugbahn, die die beste Bewertung aufweist, und ihre Vorschlag als Lösung zusammen mit ihrer Bewertung.

2. Verfahren nach Anspruch 1, dadurch gekennzeichnet, daß es das Einschreiben jeder Alternative in einen aus miteinander hierarchisch verbundenen Knoten (50 bis 55) bestehenden Graph (26) enthält, der einen Wurzel-Knoten (50) aufweist, der die vom Luftfahrzeug verfolgte Flugbahn symbolisch darstellt, wobei jeder Knoten eine Alternative symbolisiert.

3. Verfahren nach einem der vorhergehenden Ansprüche, dadurch gekennzeichnet, daß die Verarbeitung einer Alternative enthält:
- für jede elementare Aktion der Alternative die Erstellung einer Liste der spezialisierten Experten-Module (ME1 bis ME6), die diese Aktion durchführen können,
- in Abhängigkeit von der neuen Situation, die Auswahl mindestens eines spezialisierten Experten-Moduls pro Liste, um jeden so ausgewählten Experten-Modul an der Erstellung einer vollständigen Flugbahn mitwirken zu lassen,
- die aufeinanderfolgende Aktivierung der ausgewählten Experten-Module (ME1 bis ME6), um jede Aktion der Alternative durchzuführen,
- die Bildung einer Flugbahn ausgehend von den Antworten, die von den aktivierten Experten-Modulen geliefert werden, und
- die Auswertung dieser Flugbahn und die Überprüfung, ob dem Einsatz zugeordnete Randbedingungen immer noch erfüllt werden.

4. Verfahren nach Anspruch 3, dadurch gekennzeichnet, daß es die Verarbeitung jeder nicht erfüllten Randbedingung enthält, wobei es drei neue Alternativen erzeugt, die im Graph von Alternativen unterhalb der Alternative angehängt werden, die diese Randbedingung nicht erfüllt, wobei diese drei Alternativen den drei folgenden Fällen entsprechen:
- die Randbedingung wird als nicht erfüllt akzeptiert, mit der Folge einer Verschlechterung bestimmter Auswertungs-Kriterien,
- die Verarbeitung einer oder mehrerer Aktionen der Alternativen wird verändert, wenn dies möglich ist, um zu versuchen, die Randbedingung zu erfüllen, mit der Konsequenz einer Verschlechterung bestimmter Auswertungs-Kriterien, und
- Notmaßnahme-Aktionen werden angewandt, um zu versuchen, die Randbedingung zu erfüllen.

5. Verfahren nach Anspruch 4, dadurch gekennzeichnet, daß die Anwendung von Notmaßnahme-Aktionen umfaßt:
- die Suche nach Notmaßnahme-Aktionen, die den nicht erfüllten Randbedingungen zugeordnet und dem Kontext der Alternative angepaßt sind,
- die Aufgliederung jeder Notmaßnahme-Aktion in Folgen von elementaren Aktionen, wobei jede Folge von elementaren Aktionen zu einer neuen Alternative führt,
- die Aktualisierung des Graphen von Alternativen, indem alle so identifizierten Alternativen (53 bis 55) unterhalb der Alternative eingeschrieben werden, die die nicht erfüllten Randbedingungen aufweist, und
- die aufeinanderfolgende Verarbeitung jeder identifizierten Alternative.

6. Verfahren nach einem der vorhergehenden Ansprüche, dadurch gekennzeichnet, daß die aus der Aufgliederung der Aktionen in elementare Aktionen (51, 52) stammenden Alternativen systematisch verarbeitet werden, während diejenigen, die aus der Anwendung von Notmaßnahmen stammen (53 bis 55), nacheinander verarbeitet werden, bis eine von ihnen (52) keine nicht erfüllte Randbedingung mehr aufweist.

7. Verfahren nach einem der vorhergehenden Ansprüche, dadurch gekennzeichnet, daß die Flugbahnen ausgewertet werden, indem ein Risikofaktor und ein Wirkungsgradfaktor bestimmt werden und mit Hilfe einer von einem Experten erstellten Gliederung, wobei die als Lösung gewählte beste Flugbahn entspricht:
- der Flugbahn mit dem geringsten Risiko und dem größten Wirkungsgrad,
- der leistungsfähigeren von zwei in Bezug auf das Risiko gleichwertigen Flugbahnen,
- derjenigen von zwei in Bezug auf den Wirkungsgrad gleichwertigen Flugbahnen, die das geringste Risiko aufweist, oder aber
- bei zwei Flugbahnen, die gleichwertig sind, entweder weil sie gleichwertige Risiko- und Wirkungsgradfaktoren aufweisen, oder weil eine leistungsfähiger, aber riskanter ist als die andere, der vom Experten bevorzugten Flugbahn.

8. Verfahren nach einem der vorhergehenden Ansprüche, dadurch gekennzeichnet, daß es vier Darstellungsniveaus verwendet, um eine Flugbahn zu definieren:
- eine Niveau-Darstellung Einsatz, die sich aus einer Einheit von Einsatz-Phasen zusammensetzt, die durch ein Textsymbol beschrieben werden,
- eine Niveau-Darstellung Funktion, die sich aus Flugbahn-Abschnitten zusammensetzt, die makroskopisch durch Parameter wie z.B. den Datenwert einer Neigung, einer mittleren Geschwindigkeit, einer Länge oder Positionen der Endpunkte des Abschnitts charakterisiert sind,
- eine Niveau-Darstellung Phase, die durch die Definition einer Einheit von Phasen charakterisiert ist, die einer besonderen Fluglage des Luftfahrzeugs entsprechen, und
- eine Niveau-Darstellung Ende, die sich aus einer Folge von Punkten zusammensetzt, die durch ihre Koordinaten bestimmt sind,
wobei der Definitions-Modus der Phasen der Niveau-Darstellung Phase und die Art und die Anzahl von Koordinaten der Punkte der Niveau-Darstellung Ende vom Experten-Modul abhängen, der sie erarbeitet hat.

9. Vorrichtung zur Anwendung des Verfahrens nach einem der vorhergehenden Ansprüche zur Echtzeit-Neukonfigurierung der Flugbahn eines Luftfahrzeugs, das einen Rechner verwendet, der mit an Bord des Luftfahrzeugs angeordneten Organen verbunden ist, die in Echtzeit Informationen betreffend die Position, die Fluglage und den Zustand des Luftfahrzeugs und seine Umgebung liefern, wobei der Rechner einen Prozessor sowie Speicher aufweist, in denen insbesondere die Daten, die den Einsatz des Luftfahrzeugs und seinen Kontext betreffen, und eine ursprüngliche Flugbahn gespeichert sind,
dadurch gekennzeichnet, daß sie ein Mensch/Maschine-Kommunikations-Endgerät aufweist und daß zur Anpassung des Einsatzes an eine neue Situation, die durch das Eintreten eines Stör-Ereignisses erzeugt wurde, der Rechner von einem Programm gesteuert wird, das gewährleistet:
- die Funktionen einer Vielzahl von spezialisierten Experten-Modulen (ME1 bis ME6) bei der Ausarbeitung von Flugbahnen,
- eine Funktion Überwachungsorgan, das die Vielzahl von spezialisierten Experten-Modulen (M1 bis ME6) zur Definition einer neuen Flugbahn verwendet, um den Einsatz an eine neue Situation anzupassen, die durch das Eintreten eines Stör-Ereignisses erzeugt wurde.

10. Vorrichtung nach Anspruch 9, dadurch gekennzeichnet, daß die Informations-Austauschvorgänge zwischen der Funktion Überwachungsorgan und den spezialisierten Experten-Modulen gemäß dem Prinzip des schwarzen Bretts verwaltet werden.

11. Vorrichtung nach Anspruch 10, dadurch gekennzeichnet, daß das schwarze Brett in zwei Teile geteilt ist, einen ersten Teil, in dem die Daten bezüglich des Kontexts des Einsatzes aufgeführt sind, und einen zweiten Teil, in dem die verschiedenen verwendeten Experten-Module eine neue Flugbahn bilden.

12. Vorrichtung nach Anspruch 11, dadurch gekennzeichnet, daß der zweite Teil des schwarzen Bretts in vier Niveaus aufgeteilt ist, die den vier Darstellungsniveaus der Flugbahn entsprechen.

## Claims

1. Method for the real-time reconfiguration of the path of a vehicle using a computer linked up to components taken on board said vehicle and which supply real-time data concerning the position, attitude and status of the vehicle and its environment, said computer comprising a processor and memories in which are notably stored the data concerning the vehicle's mission and context, and an initial path,
characterized in that, with a view to adapting the mission to a new situation brought about by the occurrence of an event causing a disturbance, it comprises:
- the analysis of the context and the interpretation of said event in order to determine the actions to be performed;
- the breakdown of said actions into alternatives each comprised of a sequence of elementary actions that can be performed by at least one of a plurality of specialised expert modules (ME1 to ME6);
- the successive selection of each alternative (51 to 55) as a function of a certain strategy;
- the processing of the alternative selected consisting in using the specialised expert modules (ME1 to ME6) with a view to devising a path by means of the elementary actions comprising the alternative selected, and to assessing the path obtained in relation to at least one criterion;
- the selection of at least one path with the best assessment and presentation thereof as the solution, in association with its assessment.

2. Method according to claim 1,
characterised in that it comprises the writing of each alternative on a graph (26) formed of knots (50 to 55) joined together in a hierarchical manner, and having a root knot (50) symbolizing the path followed by the vehicle, each knot symbolizing an alternative.

3. Method according to any one of the previous claims,
characterized in that the processing of an alternative comprises:
- the constitution, for each elementary action of the alternative, of a list of specialised expert modules (ME1 to ME6) capable of performing that action;
- the selection, as a function of the new situation, of at least one specialised expert module per list with a view to having each expert module thus selected cooperate to obtain a complete path;
- the successive activation of the expert modules (ME1 to ME6) selected to perform each action of the alternative;
- the formation of a path from the responses supplied by the activated expert modules; and
- the assessment of this path and verification that the obligations associated with the mission are still fulfilled.

4. Method according to claim 3,
characterized in that it comprises the processing of each unfulfilled obligation, producing three new alternatives connected, on the alternatives graph, below the alternative that does not fulfil this obligation, these three alternatives corresponding respectively to the following three cases:
- the obligation is accepted as "unfulfilled" with, as consequence, a deterioration of certain assessment criteria;
- the processing of one or more actions of the alternative is modified, when possible, to tend to fulfil the obligation, with, as consequence, a deterioration of certain assessment criteria; and
- palliative measures are applied to attempt to fulfil the obligation.

5. Method according to claim 4,
characterized in that the application of palliative measures comprises:
- the seeking out of palliative measures associated with the unfulfilled obligations and adapted to the context of the alternative,
- the breakdown of each palliative measure into sequences of elementary actions, each sequence of elementary actions giving rise to a new alternative,
- the updating of the alternatives graph by inscribing all the alternatives thus identified (53 to 55) below the alternative having obligations unfulfilled, and
- the successive processing of each alternative identified.

6. Method according to any one of the previous claims,
characterized in that the alternatives generated by the breakdown of the actions into elementary actions (51, 52) are systematically processed, whereas those generated by the application of palliative measures (53 to 55) are processed successively until one of them (52) does not have any unfulfilled obligation.

7. Method according to any one of the previous claims,
characterized in that the paths are assessed by determining a risk factor and an efficiency factor, and, by means of a classification drawn up by an expert, the best path selected as a solution corresponding to:
- the least risky and most efficient path,
- the more efficient of two paths of equivalent risk,
- the less risky of two path of equivalent efficiency, or
- the one preferred by the expert in the event of two equivalent paths, either because they have equivalent risk and efficiency factors, or because one is both more efficient and riskier than the other.

8. Method according to any one of the previous claims,
characterized in that it uses four levels of representation to define a path:
- a "mission" level of representation composed of a set of mission phases described by a descriptive wording,
- a "function" level of representation composed of path portions macroscopically characterized by parameters such as the data corresponding to a gradient, an average speed, a length, or positions of the extreme points of the portion,
- a "phase" level of representation characterized by the definition of a set of phases corresponding to a particular attitude of the vehicle, and
- an "end" level of representation comprised of a series of points determined by the coordinates,
the means of defining the phases of the "phase" level of representation, and the type and number of coordinates of the points in the "end" level of representation depending on the expert module that generated them.

9. Device for implementing the method according to any one of the previous claims, for the real-time reconfiguration of the path of a vehicle using a computer linked up to components taken on board said vehicle and which supply real-time -data concerning the position, attitude and status of the vehicle and its environment, said computer comprising a processor and memories in which are notably stored the data concerning the vehicle's mission and context, and an initial path,
characterized in that it comprises a man-machine communications terminal and that, with a view to adapting the mission to a new situation brought about by the occurrence of an event causing a disturbance, the computer is controlled by a programme ensuring:
- the functions of a plurality of expert modules (ME1 to ME6) specialised in the elaborating of paths;
- a supervisor function which uses the plurality of specialised expert modules (ME1 to ME6) with a view to defining a new path in order to adapt the mission to a new situation brought about by the occurrence of an event causing a disturbance.

10. Device according to claim 9,
characterized in that data exchange between the supervisor function and the specialised expert modules is managed in accordance with the blackboard principle.

11. Device according to claim 10,
characterized in that the blackboard is divided into two parts, a first part figuring the data relating to the context of the mission, and a second part in which the different expert modules used constitute a new path.

12. Device according to claim 11,
characterized in that the second part of the blackboard is divided into four levels corresponding to the four levels of representation of the path.
